# EUROPEAN PATENT SPECIFICATION

(11) **EP 3 135 573 B1**
(45) Date of publication and mention of the grant of the patent: **04.07.2018**
(21) Application number: 16178907.8
(22) Date of filing: 11.07.2016
(51) Int. Cl.: B62K 11/04, B60B 1/08, B60T 1/06, B62M 7/04

(54) **A WHEEL FOR STRADDLED VEHICLES AND A STRADDLED VEHICLE**
RAD FÜR GRÄTSCHSITZFAHRZEUGE UND GRÄTSCHSITZFAHRZEUG
ROUE POUR VÉHICULES À CALIFOURCHON ET VÉHICULE À CALIFOURCHON

(30) Priority: 17.07.2015 JP 2015143104; 26.05.2016 JP 2016104834
(43) Date of publication of application: 01.03.2017
(73) Proprietor: Yamaha Hatsudoki Kabushiki Kaisha, Shizuoka-ken Shizuoka 438-8501 (JP)
(72) Inventor: NIIMI, Hiroshi, Shizuoka-ken, 438-8501 (JP)
(74) Representative: Stöckeler, Ferdinand

(56) References cited:
- DE-A1- 4 013 603
- DE-A1- 19 601 778
- JP-A- H1 029 402
- JP-A- S5 812 801
- JP-A- 2003 320 801

## Description

### TECHNICAL FIELD

The present invention relates to a wheel for straddled vehicles which is manufactured using die casting (i.e., which is a die-cast product).

### BACKGROUND ART

Wheels designed for vehicles, particularly for use in two-wheeled motorcycles, are manufactured by, for example, casting (see, for example, Patent Document 1).

When the casting method used is gravity casting, use of a core is easy, and therefore, weight reduction of wheels can be achieved by employing a hollow structure. However, using gravity casting disadvantageously incurs a longer cycle time and hence a higher manufacturing cost.

On the other hand, when the casting method used is high pressure die casting (hereinafter, simply referred to as "die casting"), the cycle time is short as compared with gravity casting. Thus, from the viewpoint of lowering the manufacturing cost, using die casting for manufacture of wheels is considered.
JP 2003 320801 A, which is considered as the closest prior art, discloses a wheel for a motorcycle. A hub part is constituted of an inner hub arranged on an axle side and an outer hub connected to a spoke part arranged on an outer peripheral side of the inner hub. Side walls for integrally connecting the inner hub and the outer hub are provided. Openings are provided between respective side walls.

### CITATION LIST

### PATENT LITERATURE

Patent Document 1: Japanese Laid-Open Patent Publication No. 6-183201

### SUMMARY OF INVENTION

### TECHNICAL PROBLEM

However, when die casting is used, using a core is generally difficult, and therefore, employing a hollow structure is also difficult. Thus, the mass of a wheel disadvantageously increases. Further, when die casting is used, the physical properties of raw materials are generally different from those used in gravity casting, and the amount of metal materials used for the wheel is large, so that the material cost is high. That is, when die casting is used, the manufacturing cost decreases from the viewpoint of the cycle time, but the manufacturing cost is disadvantageously increased by the material cost.

One of the objects of the present invention is to realize weight reduction and low cost in a wheel for straddled vehicles which is manufactured using die casting.

### SOLUTION TO PROBLEM

The invention provides a wheel according to claim 1.

A wheel for straddled vehicles according to an embodiment of the present invention is a wheel for straddled vehicles which is a die-cast product, including: an annular rim; a hub through which an axle is to be inserted; and a plurality of spokes connecting the rim and the hub, wherein the hub has a plurality of connecting portions connecting an inner perimeter portion and an outer perimeter portion of the hub, the plurality of connecting portions being arranged so as to radially extend from the inner perimeter portion to the outer perimeter portion and to be spaced away from one another in a circumferential direction, the plurality of connecting portions include a plurality of first connecting portions located on one side of the wheel in a rotation axis line direction in which a rotation axis line of the wheel for straddled vehicles extends and a plurality of second connecting portions located on the other side of the wheel, when the hub is viewed from the rotation axis line direction, each of the plurality of first connecting portions is present between two of the plurality of second connecting portions adjoining each other in the circumferential direction, and each of the plurality of second connecting portions is present between two of the plurality of first connecting portions adjoining each other in the circumferential direction, and when the hub is viewed from the rotation axis line direction, the hub includes through holes penetrating in the rotation axis line direction such that one through hole exists between each first connecting portion and each second connecting portion adjoining the first connecting portion in the circumferential direction.

In a wheel according to an embodiment of the present invention, the plurality of connecting portions of the hub include a plurality of first connecting portions located on one side in the rotation axis line direction and a plurality of second connecting portions located on the other side. When the hub is viewed from the rotation axis line direction, each of the first connecting portions is present between two second connecting portions adjoining each other in the circumferential direction, and each of the second connecting portions is present between two first connecting portions adjoining each other in the circumferential direction. That is, when the hub is viewed from one side in the rotation axis line direction, there is a space on the rear side of the first connecting portions (i.e., the other side in the rotation axis line direction). When the hub is viewed from the other side in the rotation axis line direction, there is a space on the rear side of the second connecting portions (i.e., one side in the rotation axis line direction) . When the hub is viewed from the rotation axis line direction, a through hole penetrating in the rotation axis line direction is provided between a first connecting portion and a second connecting portion adjoining each other in the circumferential direction. Since the wheel for straddled vehicles according to an embodiment of the present invention is manufactured by means of die casting such that the above-described spaces and through holes are formed, the mass of the wheel can be reduced, and the amount of the metal material used for manufacture can be reduced. Therefore, weight reduction can be realized, and the manufacturing cost can be reduced. Further, cleaning of the hub is easy and hence maintenance easiness can be improved as compared with a case where the above-described through holes are not formed (i.e., a configuration where the first connecting portion and the second connecting portion are connected with each other over the entire radial dimension).

In one embodiment, each of the plurality of first connecting portions and each of the plurality of second connecting portions have a stick-like shape.

When each of the first connecting portions and the second connecting portions has a stick-like shape, the projected areas in the rotation axis line direction of a through hole between a first connecting portion and a second connecting portion adjoining each other can easily be increased. Therefore, weight reduction of the wheel for straddled vehicles and reduction of the manufacturing cost can be realized more easily.

In one embodiment, in a cross section of each of the plurality of first connecting portions and each of the plurality of second connecting portions which is perpendicular to a radial direction, the ratio between a length defined along a first direction that is a longitudinal direction and a length defined along a second direction that is perpendicular to the first direction is from 1:1 to 1.5:1.

When each of the first connecting portions and the second connecting portions has a stick-like shape, in a cross section of each of the first connecting portions and the second connecting portions which is perpendicular to a radial direction, the ratio between a length defined along the first direction that is the longitudinal direction (which is referred to as "first length" for the sake of convenience) and a length defined along the second direction that is perpendicular to the first direction (which is referred to as "second length" for the sake of convenience) is preferably within a predetermined range. Specifically, when the ratio between the first length and the second length is from 1:1 to 1.5:1, the strength of the hub can be sufficiently secured, and the projected area of the through hole in the rotation axis line direction can be sufficiently large.

In one embodiment, a length defined along a radial direction of each of the plurality of first connecting portions is greater than a length defined along a longitudinal direction in a cross section which is perpendicular to a radial direction.

As the ratio of a length defined along the radial direction of the first connecting portion (which is referred to as "third length" for the sake of convenience) to a length defined along the longitudinal direction in a cross section perpendicular to the radial direction (first length) increases, the weight reduction can be further enhanced. Specifically, when the ratio of the third length to the first length exceeds 1, i.e., when the third length is greater than the first length (in other words, when the first connecting portion has a shape elongated in the radial direction), sufficient weight reduction can be achieved.

In one embodiment, a length defined along a radial direction of each of the plurality of second connecting portions is greater than a length defined along a longitudinal direction in a cross section which is perpendicular to a radial direction.

As the ratio of a length defined along the radial direction of the second connecting portion (third length) to a length defined along the longitudinal direction in a cross section perpendicular to the radial direction (first length) increases, the weight reduction can be further enhanced. Specifically, when the ratio of the third length to the first length exceeds 1, i.e., when the third length is greater than the first length (in other words, when the second connecting portion has a shape elongated in the radial direction), sufficient weight reduction can be achieved.

In one embodiment, each of the plurality of first connecting portions is generally equally distant from the two second connecting portions when the hub is viewed from the rotation axis line direction, and each of the plurality of second connecting portions is generally equally distant from the two first connecting portions when the hub is viewed from the rotation axis line direction.

When the hub is viewed from the rotation axis line direction, a first connecting portion is generally equally distant from two second connecting portions, and a second connecting portion is generally equally distant from two first connecting portions. In such a case, manufacture and designing are easy.

In one embodiment, a number of the plurality of first connecting portions is not less than three and not more than five, and a number of the plurality of second connecting portions is not less than three and not more than five.

From the viewpoints of weight reduction and improvement in maintenance easiness, the number of the plurality of first connecting portions and the number of the plurality of second connecting portions are preferably smaller. Specifically, it is preferred that the number of the plurality of first connecting portions and the number of the plurality of second connecting portions are each not more than five. Note that, however, from the viewpoint of securing sufficiently high hub strength, it is preferred that the number of the plurality of first connecting portions and the number of the plurality of second connecting portions are each not less than three.

In one embodiment, the wheel for straddled vehicles is a wheel which is made of an aluminum alloy.

The wheel for straddled vehicles according to an embodiment of the present invention is a wheel which is made of an aluminum alloy, for example. Using the aluminum alloy as the material of the wheel enables to reduce the weight of the wheel. When the through holes are provided between the first connecting portions and the second connecting portions as in the present embodiment of the present invention, the weight of the wheel which is made of an aluminum alloy can be further reduced, and the manufacturing cost can also be reduced.

In one embodiment, the outer perimeter portion of the hub has a hole used for securing a brake disk.

When a disk brake is used as the brake, for example, holes are provided in the outer perimeter portion of the hub for securing the brake disk. When the through holes are provided between the first connecting portions and the second connecting portions as in the embodiment of the present invention, the hub can be easily cleaned even if the brake disk is kept secured to the wheel.

A straddled vehicle according to another embodiment of the present invention includes a wheel which has any of the above-described configurations.

A wheel for straddled vehicles according to an embodiment of the present invention is suitably used in various straddled vehicles because weight reduction and reduction of the manufacturing cost can be realized. In a wheel for straddled vehicles according to an embodiment of the present invention, cleaning of the hub is easy. Thus, using a wheel for straddled vehicles according to the embodiment of the present invention enables to improve maintenance easiness of the straddled vehicles.

### ADVANTAGEOUS EFFECTS OF INVENTION

According to an embodiment of the present invention, in a wheel for straddled vehicles which is manufactured using die casting (i.e., which is a die-cast product), weight reduction can be realized and the manufacturing cost can be lowered. Further, cleaning of a hub is easy, and accordingly, maintenance easiness can be improved.

### BRIEF DESCRIPTION OF DRAWINGS

[FIG. **1**] A side view schematically showing a two-wheeled motorcycle **100** of an embodiment of the present invention.
[FIG. **2**] A side view schematically showing a wheel **10** of the two-wheeled motorcycle **100.**
[FIG. **3**] A side view schematically showing a hub **20** of the wheel **10.**
[FIG. **4**] A perspective view schematically showing the hub **20.**
[FIG. **5**] A side view schematically showing the hub **20.**
[FIG. **6**] A cross-sectional view schematically showing a mold **40** used in die casting for manufacture of the wheel **10,** in which the opened mold **40** is shown.
[FIG. **7**] A cross-sectional view schematically showing the mold **40,** in which the closed mold **40** is shown.
[FIG. **8**] A diagram showing a state where molten metal has been injected in a cavity of the mold **40** and then cooled.
[FIG. **9**] A side view showing another example of the arrangement of first connecting portions **26L** and second connecting portions **26R** of the hub **20.**
[FIG. **10**] A side view showing still another example of the arrangement of the first connecting portions **26L** and the second connecting portions **26R** of the hub **20.**

### DESCRIPTION OF EMBODIMENTS

Hereinafter, an embodiment of the present invention is described with reference to the attached drawings. The embodiment described below is merely exemplary. The present invention is not limited to the embodiment described below. In the description of the embodiment, like elements are designated by like reference numerals, and repetitive description of such elements is excluded. Unless otherwise specified, "front", "rear", "left", and "right" mean "front", "rear", "left", and "right" defined from the viewpoint of a rider on a straddled vehicle.

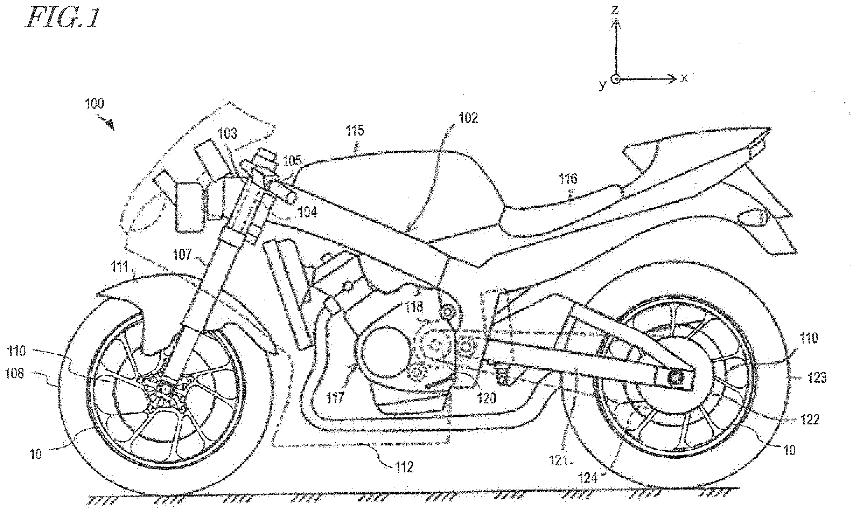

A straddled vehicle of an embodiment of the present invention is, for example, a two-wheeled motorcycle. FIG. **1** shows a two-wheeled motorcycle **100** of an embodiment of the present invention. FIG. **1** is a side view schematically showing the two-wheeled motorcycle **100.** In FIG. **1****,** the x-direction corresponds to the front and rear direction of the two-wheeled motorcycle **100,** the y-direction corresponds to the left and right direction of the two-wheeled motorcycle **100,** and the z-direction corresponds to the top and bottom direction of the two-wheeled motorcycle **100.**

Although FIG. **1** shows the on-road type two-wheeled motorcycle **100,** the straddled vehicle of an embodiment of the present invention may be a two-wheeled motorcycle of any other type, such as a so-called off-road type, moped type, or scooter type. The "straddled vehicle" means an arbitrary vehicle upon which an operator rides for driving the vehicle. The "straddled vehicle" is not limited to two-wheeled motorcycles but may be, for example, a three-wheeled motorcycle of such a type that the traveling direction can be changed by leaning the body of the vehicle (LMW).

As shown in FIG. **1****,** the two-wheeled motorcycle **100** includes a main frame **102.** The upper part of the front end of the main frame **102** is provided with a head pipe **103.** A steering shaft **104** is provided so as to penetrate through the head pipe **103.** The upper end of the steering shaft **104** is connected with a handle **105.**

The lower end of the steering shaft **104** is connected with a pair of extendable and retractable front forks **107.** Thus, the front forks **107** are swiveled by the operation of rotating the handle **105.** At the lower ends of the front forks **107,** a front wheel unit **108** is rotatably attached. The front wheel unit **108** includes a wheel **10.** This wheel **10** is rotatably attached to the lower ends of the front forks **107.** By extension and retraction of the front forks **107,** vibration of the front wheel unit **108** is absorbed. The wheel **10** includes a brake disk **110** such that the rotation of the front wheel unit **108** is controlled when the brake is activated. Above the front wheel unit **108,** a front wheel cover **111** is secured to the front forks **107.**

Over the upper part of the main frame **102,** a fuel tank **115** and a seat **116** are held adjoining each other, the fuel tank **115** on the front side and the seat **116** on the rear side. Under the fuel tank **115,** an engine **117** and a transmission **118** are secured to the main frame **102.** The main frame **102** is provided with a cover **112.** The cover **112** protects parts arranged around the handle **105** and parts arranged around the engine **117.**

At the rear side of the lower part of the main frame **102,** a swing arm **121** is swingably supported. At the rear end of the swing arm **121,** a driven sprocket **122** and a rear wheel unit **123** are rotatably supported. The rear wheel unit **123** includes a wheel **10.** This wheel **10** is rotatably attached to the rear end of the swing arm **121.** The wheel **10** includes a brake disk **110.** A chain **124** is looped between a drive sprocket **120** and the driven sprocket **122.** A driving power produced by the engine **117** is transferred to the rear wheel unit **123** via the chain **124.**

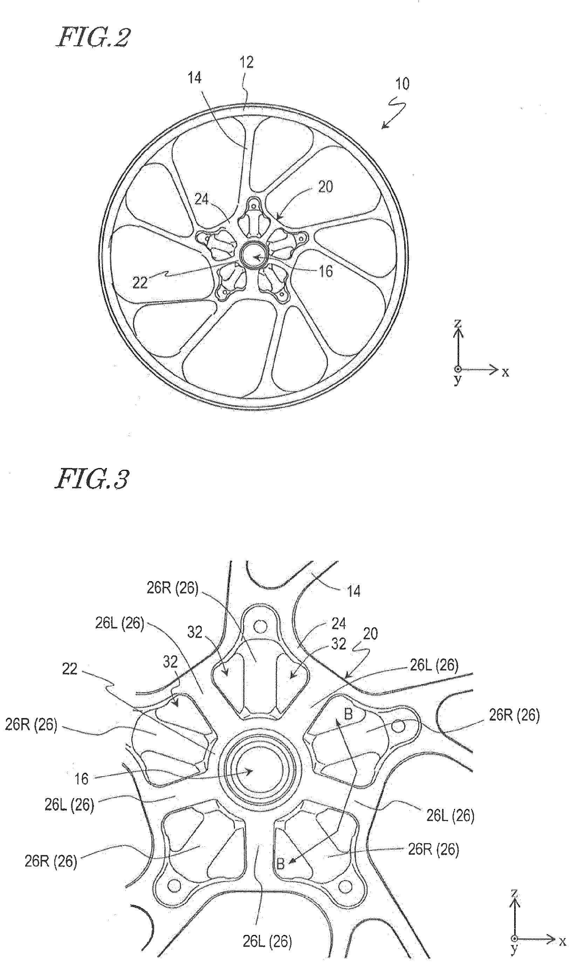

The configuration of the wheel **10** of the two-wheeled motorcycle **100** of the present embodiment is described with reference to FIG. **2.** FIG. **2** is a side view schematically showing the wheel **10.**

The wheel **10** includes, as shown in FIG. **2****,** an annular rim **12,** a hub **20** through which an axle is to be inserted, and a plurality of spokes **14** connecting the rim **12** and the hub **20.** A tire is fit on the rim **12** (see FIG. **1**) . Note that the number of spokes **14** is not limited to the example shown in FIG. **2** (10 spokes). Also, the shape and arrangement of the spokes **14** are not limited to the example shown in FIG. **2****.**

The wheel **10** of the present embodiment is produced using die casting. That is, the wheel **10** is a die-cast product.

The wheel **10** is a wheel which is made of, for example, an aluminum alloy. The aluminum alloy used can be, for example, an Al-Si-Mg based alloy. An example of the Al-Si-Mg based alloy is A356 (ASTM standards). A356 is also referred to as AC4CH (JIS standards). Alternatively, ADC3 (JIS H 5302:2006) may be used. Still alternatively, the wheel **10** may be a wheel which is made of a magnesium alloy. Note that the material of the wheel **10** is not limited to those illustrated herein but may be any other material.

The die casting method used herein is high pressure die casting, which includes the step of injecting molten metal under pressure into a mold. In one example, when the material is an aluminum alloy, the pressure of injection of molten metal into a mold in die casting can be not less than 20 MPa, and the injection rate of the molten metal can be not less than 5 m/s.

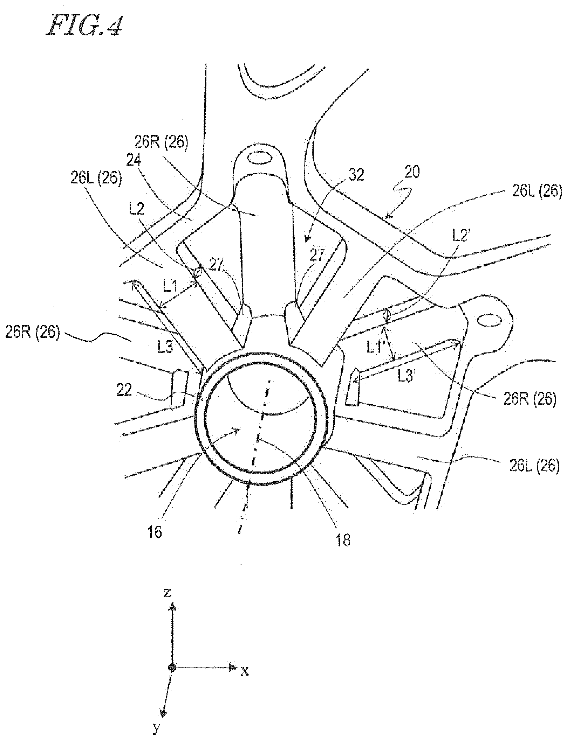

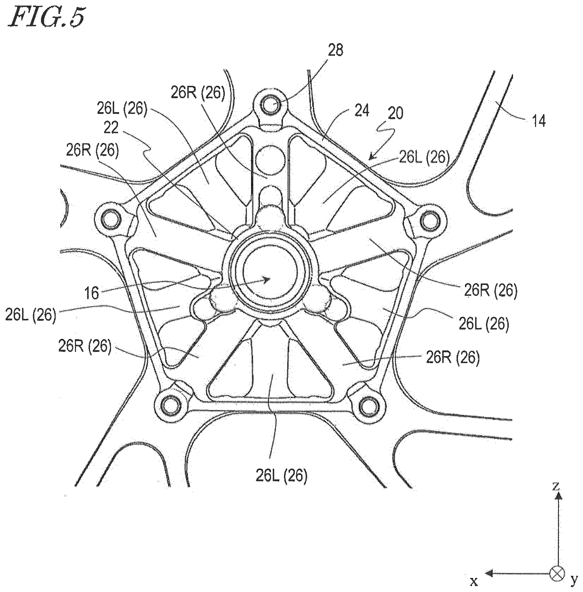

Now, the configuration of the wheel **10** is more specifically described also with reference to FIG. **3****,** FIG. **4** and FIG. **5****.** FIG. **3** is a side view enlargedly showing the hub **20** of the wheel **10.** FIG. **4** is a perspective view of the hub **20.** FIG. **5** is a side view enlargedly showing the hub **20** which is viewed from the opposite side to FIG. **3****.** Note that, in the following description, the radial direction and circumferential direction of the wheel **10** (or the radial direction and circumferential direction of the hub **20**) are simply referred to as "radial direction" and "circumferential direction", respectively.

The hub **20** includes, as shown in FIG. **2** to FIG. **5****,** an inner perimeter portion **22** having a hole **16** through which an axle is to be inserted and an outer perimeter portion **24** to which the spokes **14** are connected. The center axis of the axle corresponds to a rotation axis line **18** of the wheel **10** (see FIG. **4**). Hereinafter, a direction in which the rotation axis line **18** of the wheel **10** extends is referred to as "rotation axis line direction".

The inner perimeter portion **22** and the outer perimeter portion **24** each have the shape of a cylinder extending in the rotation axis line direction. Specifically, the inner perimeter portion **22** has the shape of a generally circular cylinder, and the outer perimeter portion **24** has the shape of a generally polygonal cylinder (more specifically, a generally pentagonal cylinder). The shape of the inner perimeter portion **22** and the shape of the outer perimeter portion **24** are not limited to those illustrated herein. For example, the outer perimeter portion **24** may have the shape of a generally circular cylinder. As shown in FIG. **5****,** the outer perimeter portion **24** has a plurality of holes **28** which are used for securing the brake disk **110** (see FIG. **1**). For example, bolts are screwed into these holes **28.**

The hub **20** has a plurality of connecting portions **26** connecting the inner perimeter portion **22** and the outer perimeter portion **24.** The plurality of connecting portions **26** are arranged so as to radially extend from the inner perimeter portion **22** to the outer perimeter portion **24** and to be spaced away from one another in the circumferential direction. The plurality of connecting portions **26** include, as shown in FIG. **4****,** a plurality of first connecting portions **26L** located on one side of the wheel **10** in the rotation axis line direction and a plurality of second connecting portions **26R** located on the other side. For example, in the left and right direction (y-direction) of the two-wheeled motorcycle **100,** the plurality of first connecting portions **26L** are located on the left side, and the plurality of second connecting portions **26R** are on the right side. In the example illustrated in FIG. **2****,** each of the number of first connecting portions **26L** and the number of second connecting portions **26R** is five.

When the hub **20** is viewed from the rotation axis line direction, each of the first connecting portions **26L** is present between two of the second connecting portions **26R** adjoining each other in the circumferential direction, and each of the second connecting portions **26R** is present between two of the first connecting portions **26L** adjoining each other in the circumferential direction. That is, the first connecting portions **26L** and the second connecting portions **26R** are at positions shifted from one another in the circumferential direction. When the hub **20** is viewed from the rotation axis line direction, the first connecting portions **26L** and the second connecting portions **26R** do not overlap one another. In other words, when the hub **20** is viewed from the rotation axis line direction, the first connecting portions **26L** and the second connecting portions **26R** are alternately arranged along the circumferential direction.

The plurality of first connecting portions **26L** are arranged with generally equal pitches in the circumferential direction. Here, five first connecting portions **26L** are arranged with the pitches of approximately 72°. The plurality of second connecting portions **26R** are arranged with generally equal pitches in the circumferential direction. Here, five second connecting portions **26R** are arranged with the pitches of approximately 72°.

In the example illustrated in FIG. **2****,** when the hub **20** is viewed from the rotation axis line direction, each of the first connecting portions **26L** is located generally equally distant from two of the second connecting portions **26R** adjoining that first connecting portion **26L** (i.e., located at a position which halves the pitch of the second connecting portions **26R**). Meanwhile, when the hub **20** is viewed from the rotation axis line direction, each of the second connecting portions **26R** is located generally equally distant from two of the first connecting portions **26L** adjoining that second connecting portion **26R** (i.e., located at a position which halves the pitch of the first connecting portions **26L**). In other words, the plurality of first connecting portions **26L** and the plurality of second connecting portions **26R** are located at positions shifted from one another by a half of the pitch in the circumferential direction of the hub **20.**

As shown in FIG. **3****,** when the hub **20** is viewed from the rotation axis line direction (or when the hub **20** is viewed from the y-direction), a through hole **32** penetrating in the rotation axis line direction is provided between a first connecting portion **26L** and a second connecting portion **26R** adjoining each other in the circumferential direction. Considering two through holes **32** adjoining each other in the circumferential direction with a first connecting portion **26L** lying therebetween, the projected areas in the rotation axis line direction of these two through holes **32** (the areas viewed in the rotation axis line direction) are generally equal. Likewise, considering two through holes **32** adjoining each other in the circumferential direction with a second connecting portion **26R** lying therebetween, the projected areas in the rotation axis line direction of these two through holes **32** (the areas viewed in the rotation axis line direction) are generally equal.

Next, the shapes of the first connecting portions **26L** and the second connecting portions **26R** are described. Each of the first connecting portions **26L** and the second connecting portions **26R** of the present embodiment has a stick-like shape. The cross-sectional shape of each of the first connecting portions **26L** and the second connecting portions **26R** is arbitrary. For example, it can be polygonal, circular, or elliptical.

As shown in FIG. **4****,** the hub **20** may have ribs **27** near the inner perimeter portion **22** for partially connecting a first connecting portion **26L** and a second connecting portion **26R** adjoining each other. The ribs **27** extend in the rotation axis line direction across the outer perimeter surface of the inner perimeter portion **22.** Note that, however, even when the ribs **27** are provided, the ribs **27** do not connect a first connecting portion **26L** and a second connecting portion **26R** adjoining each other over the entire radial dimension. That is, the first connecting portions **26L** and the second connecting portions **26R** include parts which are not connected to each other by the ribs **27.**

As previously described, in the wheel **10** of the present embodiment, the plurality of connecting portions **26** of the hub **20** include a plurality of first connecting portions **26L** located on one side in the rotation axis line direction and a plurality of second connecting portions **26R** located on the other side. When the hub **20** is viewed from the rotation axis line direction, each of the first connecting portions **26L** is present between two of the second connecting portions **26R** adjoining each other in the circumferential direction, and each of the second connecting portions **26R** is present between two of the first connecting portions **26L** adjoining each other in the circumferential direction. That is, also as seen from FIG. **3** and FIG. **5****,** when the hub **20** is viewed from one side in the rotation axis line direction, there is a space on the rear side of the first connecting portions **26L** (i.e., the other side in the rotation axis line direction). When the hub **20** is viewed from the other side in the rotation axis line direction, there is a space on the rear side of the second connecting portions **26R** (i.e., one side in the rotation axis line direction). When the hub **20** is viewed from the rotation axis line direction, there are through holes **32** penetrating in the rotation axis line direction, each of which is present between a first connecting portion **26L** and a second connecting portion **26R** adjoining each other in the circumferential direction. Since the wheel **10** of the present embodiment is manufactured by means of die casting such that these spaces and through holes **32** are formed, the mass of the wheel **10** can be reduced, and the amount of the metal material used for manufacture can be reduced. Therefore, weight reduction can be realized, and the manufacturing cost can be reduced.

Due to the through hole **32** formed between the first connecting portion **26L** and the second connecting portion **26R** adjoining each other, maintenance easiness can be improved as compared with a case where the through holes **32** are not formed (i.e., a configuration where the first connecting portion **26L** and the second connecting portion **26R** are connected with each other over the entire radial dimension). For example, as the two-wheeled motorcycle **100** runs, mud and dust adhere to the hub **20.** When there is a through hole **32** between a first connecting portion **26L** and a second connecting portion **26R** adjoining each other as in the present embodiment, a cleaning tool such as a brush can pass through that through hole **32,** and therefore, mud and dust can easily be removed. Thus, maintenance easiness of the wheel **10** (and hence maintenance easiness of the two-wheeled motorcycle **100**) can be improved.

When each of the first connecting portions **26L** and the second connecting portions **26R** has a stick-like shape as in the present embodiment, the projected areas in the rotation axis line direction of the through holes **32** can easily be increased. Therefore, weight reduction of the wheel **10** and reduction of the manufacturing cost can be realized more easily.

Now, as for the first connecting portions **26L** and the second connecting portions **26R** that have a stick-like shape, three different lengths are considered. Specifically, as for a first connecting portion **26L,** in a cross section perpendicular to the radial direction of the first connecting portion **26L,** length L1 defined along the first direction that is the longitudinal direction, length L2 defined along the second direction that is perpendicular to the first direction, and length L3 defined along the radial direction of the first connecting portion **26L** are considered (see FIG. **4**). Hereinafter, lengths L1, L2 and L3 are referred to as "first length", "second length" and "third length", respectively, for the sake of convenience. Likewise, as for a second connecting portion **26R,** in a cross section perpendicular to the radial direction of the second connecting portion **26R,** length L1' defined along the first direction that is the longitudinal direction, length L2' defined along the second direction that is perpendicular to the first direction, and length L3' defined along the radial direction of the second connecting portion **26R** are considered (see FIG. **4**). Hereinafter, lengths L1', L2' and L3' are also referred to as "first length", "second length" and "third length", respectively, for the sake of convenience.

The ratio between first length L1 and second length L2 of the first connecting portion **26L** and the ratio between first length L1' and second length L2' of the second connecting portion **26R** are each preferably within a predetermined range. Specifically, when the ratio between first length L1 and second length L2 of the first connecting portion **26L** is from 1:1 to 1.5:1, the strength of the hub can be sufficiently secured, and the projected area of the through holes **32** in the rotation axis line direction can be sufficiently large. Likewise, when the ratio between first length L1' and second length L2' of the second connecting portion **26R** is from 1:1 to 1.5:1, the strength of the hub can be sufficiently secured, and the projected area of the through holes **32** in the rotation axis line direction can be sufficiently large.

As the ratio of third length L3 to first length L1 of the first connecting portion **26L** increases, the weight reduction can be further enhanced. Specifically, when the ratio of third length L3 to first length L1 exceeds 1, i.e., when third length L3 is greater than first length L1 (in other words, when the first connecting portion **26L** has a shape elongated in the radial direction), sufficient weight reduction can be achieved.

Likewise, as the ratio of third length L3' to first length L1' of the second connecting portion **26R** increases, the weight reduction can be further enhanced. Specifically, when the ratio of third length L3' to first length L1' exceeds 1, i.e., when third length L3' is greater than first length L1' (in other words, when the second connecting portion **26R** has a shape elongated in the radial direction), sufficient weight reduction can be achieved.

In the present embodiment, when the hub **20** is viewed from the rotation axis line direction, a first connecting portion **26L** is generally equally distant from two second connecting portions **26R,** and a second connecting portion **26R** is generally equally distant from two first connecting portions **26L.** That is, the plurality of first connecting portions **26L** and the plurality of second connecting portions **26R** are located at positions shifted from one another by a half of the pitch in the circumferential direction of the hub **20.** Using such a configuration makes manufacture and design easier.

Although in the example illustrated in the present embodiment the hub **20** has five first connecting portions **26L** and five second connecting portions **26R,** the number of the plurality of first connecting portions **26L** and the number of the plurality of second connecting portions **26R** are arbitrary and are not particularly limited. From the viewpoints of weight reduction and improvement in maintenance easiness, the number of the plurality of first connecting portions and the number of the plurality of second connecting portions are preferably smaller. Specifically, it is preferred that the number of the plurality of first connecting portions and the number of the plurality of second connecting portions are each not more than five. Note that, however, from the viewpoint of securing sufficiently high hub strength, it is preferred that the number of the plurality of first connecting portions and the number of the plurality of second connecting portions are each not less than three.

Using the illustrated aluminum alloy or magnesium alloy as the material of the wheel **10** enables to reduce the weight of the wheel. When the through holes **32** are provided between the first connecting portions **26L** and the second connecting portions **26R** as in the present embodiment, the weight of a wheel which is made of an aluminum alloy or a wheel which is made of a magnesium alloy can be further reduced, and the manufacturing cost can also be reduced.

When a disk brake is used as the brake of the two-wheeled motorcycle **100,** for example, the holes **28** are provided in the outer perimeter portion **24** of the hub **20** for securing the brake disk **110.** When the through holes **32** are provided between the first connecting portions **26L** and the second connecting portions **26R** as in the present embodiment, the hub **20** can be easily cleaned even if the brake disk **110** is kept secured to the wheel **10.**

Next, a manufacturing method of the wheel **10** of the present embodiment is described. The wheel **10** of the present embodiment is manufactured using die casting. The mold used in die casting only needs to be a mold whose cavity is defined so as to have a shape corresponding to the hub **20** that has the above-described configuration.

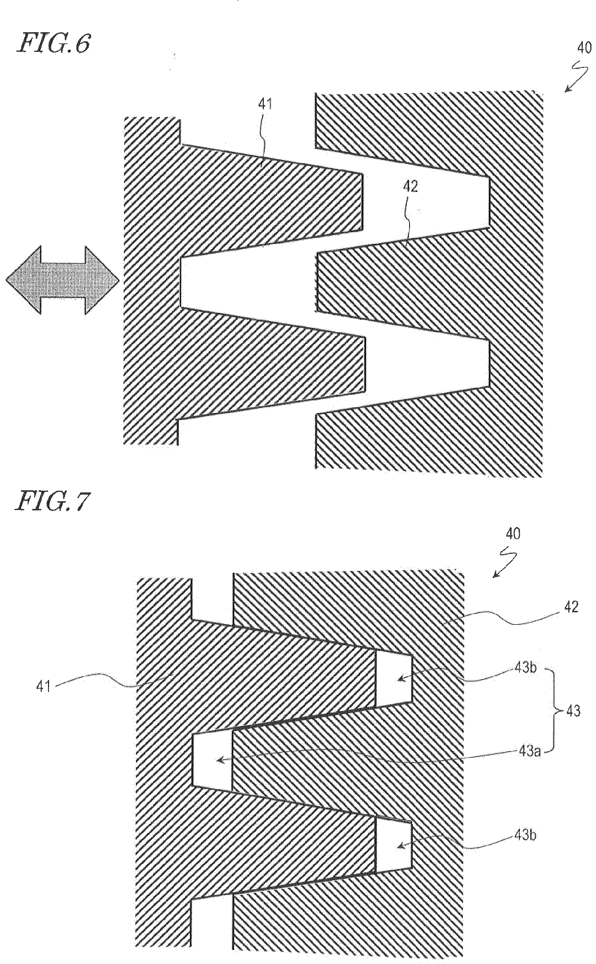

FIG. **6** and FIG. **7** show a mold **40** for use in die casting that is for manufacture of the wheel **10.** FIG. **6** and FIG. **7** respectively show a cross-sectional structure of the opened mold **40** and a cross-sectional structure of the closed mold **40,** each showing a region that forms a portion of the hub **20** taken along line **B-B** of FIG. **3****.**

The mold **40** includes two die plates **41** and **42** as shown in FIG. **6** and FIG. **7**. Here, the die plate **41** is the movable die plate, and the die plate **42** is the stationary die plate. On the contrary, it is also possible that the die plate **41** is the stationary die plate while the die plate **42** is the movable die plate.

As shown in FIG. **7****,** when the mold **40** is closed, a cavity (space) **43** which has a shape corresponding to the wheel **10** is formed between the movable die plate **41** and the stationary die plate **42.** This cavity **43** includes regions corresponding to the first connecting portions **26L** of the hub **20** (first regions **43a**) and regions corresponding to the second connecting portions **26R** of the hub **20** (second regions **43b).** As seen from FIG. **7**, there are no spaces between the first regions **43a** and the second regions **43b.**

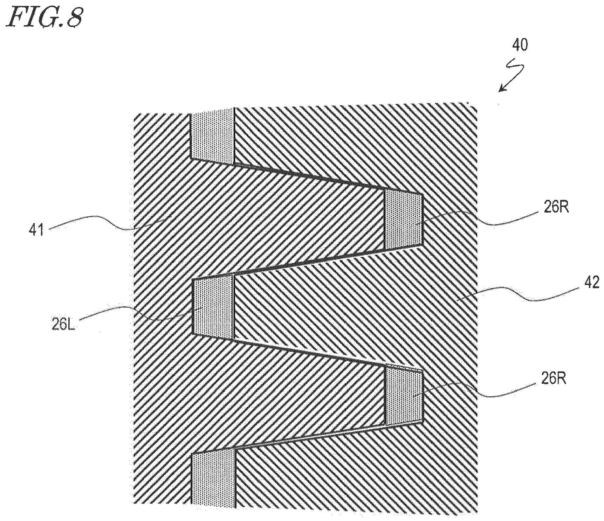

Molten metal of a raw material (e.g., aluminum alloy) is injected into the cavity **43** of the closed mold **40.** The injection pressure is, for example, not less than 20 MPa, and the injection rate is, for example, not less than 5 m/s. Thereafter, the material is cooled, whereby first connecting portions **26L** are formed in the first regions **43a** and second connecting portions **26R** are formed in the second regions **43b** as shown in FIG. **8****.** Thereafter, the mold **40** is opened again for separating a molded product from the mold, whereby a wheel **10** is obtained. Since as previously described there are no spaces between the first regions **43a** and the second regions **43b** when the mold **40** is closed (see FIG. 7), the completed wheel **10** has the through holes **32** between the first connecting portions **26L** corresponding to the first regions **43a** and the second connecting portions **26R** corresponding to the second regions **43b.** Therefore, the mass of the wheel **10** can be reduced, and the amount of the metal material used for manufacture can be reduced. Thus, weight reduction can be realized, and the manufacturing cost can be reduced.

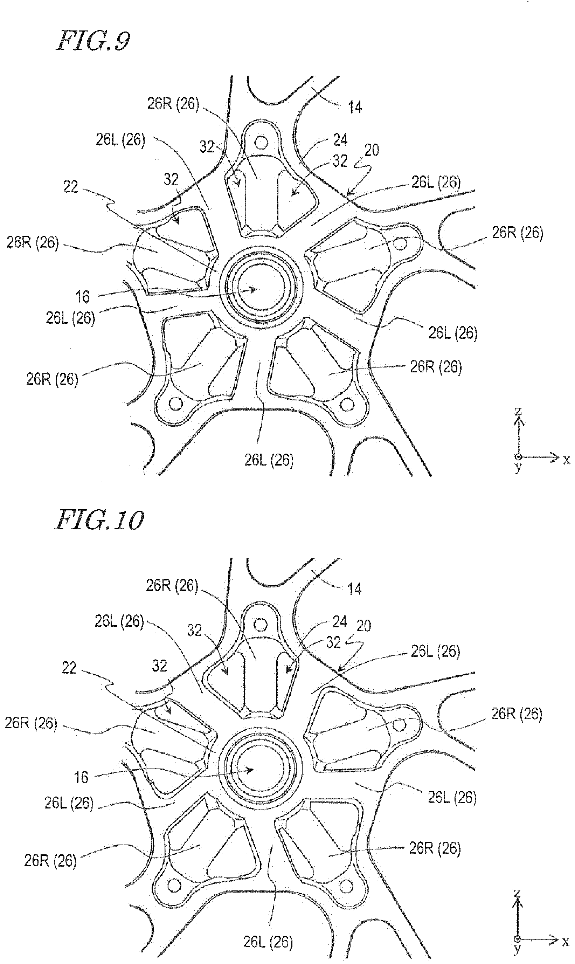

Although in the example illustrated in the foregoing the plurality of first connecting portions **26L** and the plurality of second connecting portions **26R** are located at positions shifted from one another by a half of the pitch in the circumferential direction, the present invention is not limited to such an arrangement. It is only necessary that the positions of the first connecting portions **26L** and the second connecting portions **26R** are shifted from one another in the circumferential direction. The amount of the shift does not need to be equal to a half of the pitch. FIG. **9** and FIG. **10** show other examples of the arrangement of the first connecting portions **26L** and the second connecting portions **26R.**

The first connecting portions **26L** of the example illustrated in FIG. **9** are located at positions shifted clockwise relative to the first connecting portions **26L** of the example illustrated in FIG. **3****.** In the example illustrated in FIG. **9****,** the first connecting portions **26L** are located at positions shifted clockwise by 3/4 of the pitch relative to the second connecting portions **26R.** Thus, considering two through holes **32** adjoining each other in the circumferential direction with a first connecting portion **26L** lying therebetween, the projected areas in the rotation axis line direction of these two through holes **32** are different from each other. Likewise, considering two through holes **32** adjoining each other in the circumferential direction with a second connecting portion **26R** lying therebetween, the projected areas in the rotation axis line direction of these two through holes **32** are different from each other.

The first connecting portions **26L** of the example illustrated in FIG. **10** are located at positions shifted anticlockwise relative to the first connecting portions **26L** of the example illustrated in FIG. **3****.** In the example illustrated in FIG. **10****,** the first connecting portions **26L** are located at positions shifted clockwise by 1/4 of the pitch relative to the second connecting portions **26R.** Thus, considering two through holes **32** adjoining each other in the circumferential direction with a first connecting portion **26L** lying therebetween, the projected areas in the rotation axis line direction of these two through holes **32** are different from each other. Likewise, considering two through holes **32** adjoining each other in the circumferential direction with a second connecting portion **26R** lying therebetween, the projected areas in the rotation axis line direction of these two through holes **32** are different from each other.

Even when the configurations illustrated in FIG. **9** and FIG. **10** are used, the effect of realizing weight reduction and reduction of the manufacturing cost is achieved, and the effect of improving maintenance easiness is also achieved.

The foregoing description of the embodiment is merely an example of the present invention and does not limit the present invention. Also, still another embodiment is possible which is realized by appropriately combining respective elements that have been described in the foregoing embodiment. Modifications, substitutions, additions and omissions can be made to the present invention within the extent of the claims.

### INDUSTRIAL APPLICABILITY

According to an embodiment of the present invention, in a wheel for straddled vehicles which is manufactured using die casting (i.e., which is a die-cast product), weight reduction can be realized, and the manufacturing cost can be reduced. Also, cleaning of the hub is easy, so that maintenance easiness can be improved.

A wheel for straddled vehicles according to an embodiment of the present invention is suitably used in various straddled vehicles, typically two-wheeled motorcycles.

### REFERENCE SIGNS LIST

- **10**: wheel
- **12**: rim
- **14**: spoke
- **18**: rotation axis line
- **20**: hub
- **22**: inner perimeter portion
- **24**: outer perimeter portion
- **26**: connecting portion
- **26L**: first connecting portion
- **26R**: second connecting portion
- **32**: through hole
- **40**: mold
- **41**: movable die plate
- **42**: stationary die plate
- **43**: cavity
- **43a**: first region
- **43b**: second region
- **100**: two-wheeled motorcycle

## Claims

1. A wheel (10) for straddled vehicles (100) which is a die-cast product, comprising:
an annular rim (12);
a hub (20) through which an axle is to be inserted; and
a plurality of spokes (14) connecting the rim (12) and the hub (20),
wherein the hub (20) has a plurality of connecting portions (26, 26L, 26R) connecting an inner perimeter portion (22) and an outer perimeter portion (24) of the hub (20), the plurality of connecting portions (26, 26L, 26R) being arranged so as to radially extend from the inner perimeter portion (22) to the outer perimeter portion (24) and to be spaced away from one another in a circumferential direction,
the plurality of connecting portions (26, 26L, 26R) include a plurality of first connecting portions (26L) located on one side of the wheel in a rotation axis line direction in which a rotation axis line (18) of the wheel (10) for straddled vehicles (100) extends and a plurality of second connecting portions (26R) located on the other side of the wheel,
when the hub (20) is viewed from the rotation axis line direction, each of the plurality of first connecting portions (26L) is present between two of the plurality of second connecting portions (26R) adjoining each other in the circumferential direction, and each of the plurality of second connecting portions (26R) is present between two of the plurality of first connecting portions (26L) adjoining each other in the circumferential direction, and
**characterized in that**, when the hub (20) is viewed from the rotation axis line direction, the hub includes through holes (32) penetrating in the rotation axis line direction, such that one through hole exists between each first connecting portion (26L) and each second connecting portion (26R) adjoining the first connecting portion in the circumferential direction.

2. The wheel (10) for straddled vehicles (100) according to claim 1, wherein each of the plurality of first connecting portions (26L) and each of the plurality of second connecting portions (26R) have a stick-like shape.

3. The wheel (10) for straddled vehicles (100) according to claim 2 wherein, in a cross section of each of the plurality of first connecting portions (26L) and each of the plurality of second connecting portions (26R) which is perpendicular to a radial direction, the ratio between a length defined along a first direction that is a longitudinal direction and a length defined along a second direction that is perpendicular to the first direction is from 1:1 to 1.5:1.

4. The wheel (10) for straddled vehicles (100) according to claim 2 or 3, wherein a length defined along a radial direction of each of the plurality of first connecting portions (26L) is greater than a length defined along a longitudinal direction in a cross section which is perpendicular to a radial direction.

5. The wheel (10) for straddled vehicles (100) according to any of claims 2 to 4, wherein a length defined along a radial direction of each of the plurality of second connecting portions (26R) is greater than a length defined along a longitudinal direction in a cross section which is perpendicular to a radial direction.

6. The wheel (10) for straddled vehicles (100) according to any of claims 1 to 5, wherein
each of the plurality of first connecting portions (26L) is generally equally distant from the two second connecting portions (26R) when the hub (20) is viewed from the rotation axis line direction, and
each of the plurality of second connecting portions (26R) is generally equally distant from the two first connecting portions (26L) when the hub (20) is viewed from the rotation axis line direction.

7. The wheel (10) for straddled vehicles (100) according to any of claims 1 to 6, wherein a number of the plurality of first connecting portions (26L) is not less than three and not more than five, and a number of the plurality of second connecting portions (26R) is not less than three and not more than five.

8. The wheel (10) for straddled vehicles (100) according to any of claims 1 to 7, wherein the wheel (10) for straddled vehicles (100) is a wheel (10) which is made of an aluminum alloy.

9. The wheel (10) for straddled vehicles (100) according to any of claims 1 to 8, wherein the outer perimeter portion (24) of the hub (20) has a hole (28) used for securing a brake disk (110).

10. A straddled vehicle (100) comprising the wheel (10) as set forth in any of claims 1 to 9.

## Patentansprüche

1. Ein Rad (10) für Grätschtypfahrzeuge (100), das ein Druckgussprodukt ist, das folgende Merkmale aufweist:
einen ringförmigen Radkranz (12);
eine Nabe (20), durch die eine Achse einzufügen ist; und
eine Mehrzahl von Speichen (14), die den Radkranz (12) und die Nabe (20) verbinden,
wobei die Nabe (20) eine Mehrzahl von Verbindungsabschnitten (26, 26L, 26R) aufweist, die einen Innenumfangsabschnitt (22) und einen Außenumfangsabschnitt (24) der Nabe (20) verbinden, wobei die Mehrzahl von Verbindungsabschnitten (26, 26L, 26R) angeordnet ist, um sich von dem Innenumfangsabschnitt (22) radial zu dem Außenumfangsabschnitt (24) zu erstrecken, und um in einer Umfangsrichtung voneinander beabstandet zu sein,
wobei die Mehrzahl von Verbindungsabschnitten (26, 26L, 26R) eine Mehrzahl von ersten Verbindungsabschnitten (26L), die an einer Seite des Rads in der Drehachsenlinienrichtung angeordnet sind, in der sich eine Drehachsenlinie (18) des Rads (18) für Grätschtypfahrzeuge (100) erstreckt, und eine Mehrzahl von zweiten Verbindungsabschnitten (26R) umfasst, die auf der anderen Seite des Rads angeordnet ist,
wenn die Nabe (20) von der Drehachsenlinienrichtung aus gesehen wird, jeder der Mehrzahl von ersten Verbindungsabschnitten (26L) zwischen zwei der Mehrzahl von zweiten Verbindungsabschnitten (26R) vorliegt, die in der Umfangsrichtung aneinander angrenzen, und jeder der Mehrzahl von zweiten Verbindungsabschnitten (26R) zwischen zwei der Mehrzahl von ersten Verbindungsabschnitten (26L) vorliegt, die in der Umfangsrichtung aneinander angrenzen, und
**dadurch gekennzeichnet, dass**, wenn die Nabe (20) von der Drehachsenlinienrichtung aus gesehen wird, die Nabe Durchgangslöcher (32) umfasst, die in der Drehachsenlinienrichtung durchdringen, so dass ein Durchgangsloch vorliegt zwischen jedem ersten Verbindungsabschnitt (26L) und jedem zweiten Verbindungsabschnitt (26R), der in der Umfangsrichtung an den ersten Verbindungsabschnitt angrenzt.

2. Das Rad (10) für Grätschtypfahrzeuge (100) gemäß Anspruch 1, bei dem jeder der Mehrzahl von ersten Verbindungsabschnitten (26L) und jeder der Mehrzahl von zweiten Verbindungsabschnitten (26R) eine stangenartige Form aufweist.

3. Das Rad (10) für Grätschtypfahrzeuge (100) gemäß Anspruch 2, bei dem in einem Querschnitt von jedem der Mehrzahl von ersten Verbindungsabschnitten (26L) und jedem der Mehrzahl von zweiten Verbindungsabschnitten (26R), der senkrecht zu einer Radialrichtung ist, das Verhältnis zwischen einer Länge, die entlang einer ersten Richtung definiert ist, die eine Längsrichtung ist, und einer Länge, die entlang einer zweiten Richtung definiert ist, die senkrecht zu der ersten Richtung ist, von 1:1 bis 1,5:1 reicht.

4. Das Rad (10) für Grätschtypfahrzeuge (100) gemäß Anspruch 2 oder 3, bei dem eine Länge, die entlang einer Radialrichtung von jedem der Mehrzahl von ersten Verbindungsabschnitten (26L) definiert ist, größer ist als eine Länge, die entlang einer Längsrichtung in einem Querschnitt definiert ist, der senkrecht zu einer Radialrichtung ist.

5. Das Rad (10) für Grätschtypfahrzeuge (100) gemäß einem der Ansprüche 2 bis 4, bei dem eine Länge, die entlang einer Radialrichtung von jedem der Mehrzahl von zweiten Verbindungsabschnitten (26R) definiert ist, größer ist als eine Länge, die entlang einer Längsrichtung in einem Querschnitt definiert ist, der senkrecht zu einer Radialrichtung ist.

6. Das Rad (10) für Grätschtypfahrzeuge (100) gemäß einem der Ansprüche 1 bis 5, bei dem:
jeder der Mehrzahl von ersten Verbindungsabschnitten (26L) im Allgemeinen gleich beabstandet ist von den zwei zweiten Verbindungsabschnitten (26R), wenn die Nabe (20) von der Drehachsenlinienrichtung aus betrachtet wird, und
jeder der Mehrzahl von zweiten Verbindungsabschnitten (26R) im Allgemeinen gleich beabstandet ist von den zwei ersten Verbindungsabschnitten (26L), wenn die Nabe (20) von der Drehachsenlinienrichtung aus betrachtet wird.

7. Das Rad (10) für Grätschtypfahrzeuge (100) gemäß einem der Ansprüche 1 bis 6, bei dem eine Anzahl der Mehrzahl von ersten Verbindungsabschnitten (26L) nicht kleiner als drei und nicht größer als fünf ist, und eine Anzahl der Mehrzahl von zweiten Verbindungsabschnitten (26R) nicht kleiner als drei und nicht größer als fünf ist.

8. Das Rad (10) für Grätschtypfahrzeuge (100) gemäß einem der Ansprüche 1 bis 7, bei dem das Rad (10) für Grätschtypfahrzeuge (100) ein Rad (10) ist, das aus einer Aluminiumlegierung hergestellt ist.

9. Das Rad (10) für Grätschtypfahrzeuge (100) gemäß einem der Ansprüche 1 bis 8, bei dem der Außenumfangsabschnitt (24) der Nabe (20) ein Loch (28) aufweist, das zum Sichern einer Bremsscheibe (110) verwendet wird.

10. Ein Grätschtypfahrzeug (100), das das Rad (10) gemäß einem der Ansprüche 1 bis 9 aufweist.

## Revendications

1. Roue (10) pour véhicules à selle (100) qui est un produit moulé sous pression, comprenant:
une jante annulaire (12);
un moyeu (20) à travers lequel doit être inséré un essieu; et
une pluralité de rayons (14) connectant la jante (12) et le moyeu (20),
dans lequel le moyeu (20) présente une pluralité de parties de connexion (26, 26L, 26R) connectant une partie de périmètre intérieur (22) et une partie de périmètre extérieur (24) du moyeu (20), la pluralité de parties de connexion (26, 26L, 26R) étant disposées de manière à s'étendre radialement de la partie de périmètre intérieur (22) à la partie de périmètre extérieur (24) et à être espacées l'une de l'autre dans une direction circonférentielle,
la pluralité de parties de connexion (26, 26L, 26R) comportent une pluralité de premières parties de connexion (26L) situées d'un côté de la roue dans une direction de la ligne d'axe de rotation dans laquelle s'étend une ligne d'axe de rotation (18) de la roue pour véhicules à selle (100) et une pluralité de deuxièmes parties de connexion (26R) situées de l'autre côté de la roue,
lorsque le moyeu (20) est vu dans la direction de la ligne d'axe de rotation, chacune de la pluralité de premières parties de connexion (26L) est présente entre deux de la pluralité de deuxièmes parties de connexion (26R) adjacentes l'une à l'autre dans la direction circonférentielle, et chacune de la pluralité de deuxièmes parties de connexion (26R) est présente entre deux de la pluralité de premières parties de connexion (26L) adjacentes l'une à l'autre dans la direction circonférentielle, et
**caractérisée par le fait que**, lorsque le moyeu (20) est vu dans la direction de la ligne d'axe de rotation, le moyeu comporte des trous traversants (32) pénétrant dans la direction de la ligne d'axe de rotation, de sorte qu'il existe un trou traversant entre chaque première partie de connexion (26L) et chaque deuxième partie de connexion (26R) adjacente à la première partie de connexion dans la direction circonférentielle.

2. Roue (10) pour véhicules à selle (100) selon la revendication 1, dans laquelle chacune de la pluralité de premières parties de connexion (26L) et chacune de la pluralité de deuxièmes parties de connexion (26R) présente une forme de type bâton.

3. Roue (10) pour véhicules à selle (100) selon la revendication 2, dans laquelle, dans une section transversale de chacune de la pluralité de premières parties de connexion (26L) et chacune de la pluralité de deuxièmes parties de connexion (26R) qui est perpendiculaire à une direction radiale, le rapport entre une longueur définie dans une première direction qui est une direction longitudinale et une longueur définie dans une deuxième direction qui est perpendiculaire à la première direction est de 1:1 à 1,5:1.

4. Roue (10) pour véhicules à selle (100) selon la revendication 2 ou 3, dans laquelle une longueur définie dans une direction radiale de chacune de la pluralité de premières parties de connexion (26L) est supérieure à une longueur définie dans une direction longitudinale dans une section transversale qui est perpendiculaire à une direction radiale.

5. Roue (10) pour véhicules à selle (100) selon l'une quelconque des revendications 2 à 4, dans laquelle une longueur définie dans une direction radiale de chacune de la pluralité de deuxièmes parties de connexion (26R) est supérieure à une longueur définie dans une direction longitudinale dans une section perpendiculaire à une direction radiale.

6. Roue (10) pour véhicules à selle (100) selon l'une quelconque des revendications 1 à 5, dans laquelle
chacune de la pluralité de premières parties de connexion (26L) est généralement équidistante des deux deuxièmes parties de connexion (26R) lorsque le moyeu (20) est vu dans la direction de la ligne d'axe de rotation, et
chacune de la pluralité de deuxièmes parties de connexion (26R) est généralement équidistante des deux premières parties de connexion (26L) lorsque le moyeu (20) est vu dans la direction de la ligne d'axe de rotation.

7. Roue (10) pour véhicules à selle (100) selon l'une quelconque des revendications 1 à 6, dans laquelle un nombre de la pluralité de premières parties de connexion (26L) n'est pas inférieur à trois et pas supérieur à cinq, et un nombre de la pluralité de deuxièmes parties de connexion (26R) n'est pas inférieur à trois et pas supérieur à cinq.

8. Roue (10) pour véhicules à selle (100) selon l'une quelconque des revendications 1 à 7, dans laquelle la roue (10) pour véhicules à selle (100) est une roue (10) qui est réalisée en alliage d'aluminium.

9. Roue (10) pour véhicules à selle (100) selon l'une quelconque des revendications 1 à 8, dans laquelle la partie de périmètre extérieur (24) du moyeu (20) présente un trou (28) utilisé pour fixer un disque de frein (110) .

10. Véhicule à selle (100) comprenant la roue (10) selon l'une quelconque des revendications 1 à 9.
